Europäisches Patentamt

(19) European Patent Office

Office européen des brevets

(11) Publication number: **0 047 711**
A2

(12) # EUROPEAN PATENT APPLICATION

(21) Application number: 81630048.7

(51) Int. Cl.³: **B 29 H 5/04**

(22) Date of filing: 07.08.81

(30) Priority: 08.09.80 US 184827

(43) Date of publication of application: 17.03.82
Bulletin 82/11

(84) Designated Contracting States: DE FR GB IT

(71) Applicant: THE GOODYEAR TIRE & RUBBER
COMPANY, 1144 East Market Street, Akron,
Ohio, 44316 (US)

(72) Inventor: Miller, Rickie Lee, 2750 Turkeyfoot Lake Road,
Uniontown Ohio 44685 (US)

(74) Representative: Weyland, Joseph Jean Pierre, Goodyear
International Tire Technical Center Patent Department
Avenue Gordon Smith, L-7750 Colmar-Berg (LU)

(54) Retreading and rebuilding of radial tires.

(57) A method of retreading a radial tire having damaged belt plies, and a curing tube 44 used in retreading the tire. After the tread 22 and damaged belt plies 32 and 34 are removed, a curing tube 44 having a restricting member 46 integral therewith is inserted into the cavity of the tire 10 for limiting expansion of the tire to a predetermined diameter D. The tire 10 is expanded to the predetermined diameter D by inflating the curing tube 44. The tread and belt plies are replaced. The new tread 38 and belt plies 40 and 42 are bonded to the tire 10 while the curing tube 44 is in the cavity of the tire and inflated.

FIG. 2

## RETREADING AND REBUILDING OF RADIAL TIRES

This invention relates to tires and, more particularly, the retreading of radial tires having damaged belt plies. This invention has been found to be suitable for the retreading of large radial truck tires such as those having a size greater than 9.00R20 which have a damaged belt structure.

In order to properly retread a radial tire, it is necessary to remove for replacement any damaged belt plies. The removal of the belt plies may result in an inability of any remaining belt structure to sufficiently limit expansion of the tire when inflated. It is necessary to prevent over-expansion of the radial tire casing when the restraint of the belt structure is removed in order to replace the tread and damaged belt structure while the radial tire casing is at a desired diameter such that the retreaded tire will be at substantially the same size as the radial tire originally was when newly molded and vulcanized.

Previous attempts to prevent this over-expansion of a radial tire casing have included the provision of narrow inextensible bands around the outer peripheral surface of the tire casing after the worn tread and damaged belt plies have been removed. Such a method is not entirely satisfactory in that this requires an additional step during the retreading and rebelting of each tire. In addition, it is also desirable not to have a structure in a tire which is no longer necessary after the tire has been built or rebuilt.

Reinforced bladders connected with tire building machines have been used to shape radial tire carcasses so that belt structures can be supplied during radial tire building. After the tire is built, it is removed from the tire building machine and the bladder. A conventional curing tube is inserted into the tire carcass and the tire is expanded into a mold for curing. In such cases, the mold limits expansion of the tire to the desired diameter and it would be counter-productive to attempt to limit expansion of the curing tube.

Reinforced air bags were used to expand tires during the years such as the 1930s prior to the commercial introduction of radial tires. The conventional tires of that era were bias tires, and the carcass plies of bias tires effectively limit expansion during inflation. In addition, such air bags were used for expanding the tires into molds or, in some cases, the tires were wrapped with cloth or fabric and the air bags were used to expand the tires against the cloth or fabric. Such air bags were thus reinforced for other reasons such as to provide only lateral expansion thereof for sectional repairs in a sectional mold.

This invention limits the expansion of a radial tire to a desired diameter to permit the bonding of a new tread and belt structure to a radial tire in a curing chamber without the use of a mold.

In accordance with this invention, there is provided a method of retreading a radial tire having damaged belt plies comprising:

(a) removing the tread of the tire;

(b) removing the damaged belt plies;

(c) inserting into the cavity of the tire a curing tube having a restricting member integral therewith for limiting expansion of the tire to a predetermined diameter;

(d) expanding the tire to said predetermined diameter by inflating said curing tube;

(e) replacing the damaged belt plies with new belt plies;

(f) replacing the tread with a new tread; and

(g) bonding the new tread and belt plies to the tire while said curing tube is in the cavity of the tire and inflated.

In the drawings:

Figure 1 is a partial cross-section of a radial tire;

Figure 2 is an exploded partial cross-sectional view illustrating the rebuilding of the tire shown in Figure 1 in accordance with this invention.

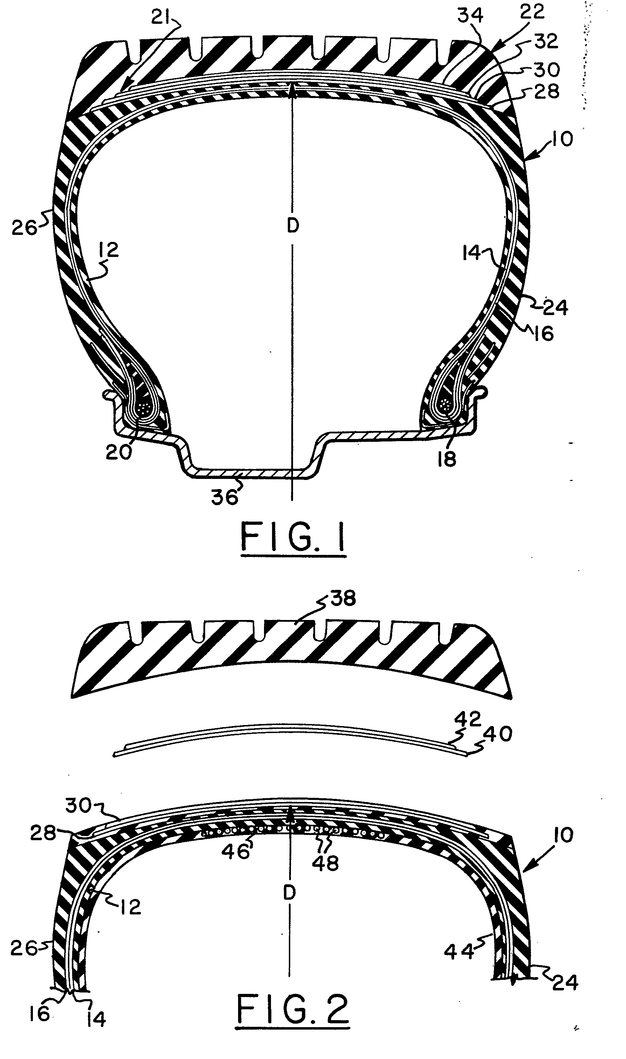

A detailed description of the preferred embodiment of this invention is provided hereinafter. With reference to Figure 1, there is shown a radial tire 10 composed of conventional components including a fluid-impervious innerliner 12 and a single or a plurality of carcass plies 14 and 16 reinforced with parallel cords composed of rayon, nylon, polyester, aramid, steel, or any other suitable material and extending between and anchored to a pair of inextensible annular beads 18 and 20, respectively. A tread 22 is disposed about the outer periphery of the tire 10 and extends circumferentially thereabout. A belt structure 21 for annularly reinforcing the tire is disposed between the carcass plies 14 and 16 and the tread 22 and is reinforced with two or more individual layers of parallel cords composed of rayon, nylon, polyester, aramid, steel, or any other suitable reinforcing material. A pair of sidewall portions 24 and 26 are provided between the edges of the tread 22 and the beads 18 and 20, respectively.

The belt structure 21 in this case is composed of four superimposed belt plies 28,30,32 and 34, each of which is reinforced with parallel metal cords disposed at angles of from 11 to 24 degrees measured in relation to and at the mid-circumferential plane of the tire 10; that is, a plane containing the mid-circumferential centerline of the tread 22. The reinforcing cords of the two innermost plies 28 and 30 extend in an opposed direction to the reinforcing cords of the two outermost plies 32 and 34. The reinforcing cords of the carcass plies 14 and 16 are disposed at angles in the range of from 75 degrees to 90 degrees relative to and at the mid-circumferential plane of the tire 10.

The diameter D of the tire casing, i.e., the overall diameter of the tire 10 when properly mounted on a conventional wheel rim 36 and inflated to a rated inflation pressure, minus twice the combined thickness of the tread 22 and belt structure 21, can be readily computed for any given tire. It is important to restrict the expansion of the retreaded tire casing to this same diameter D, such that the retreaded tire will be the same size as the tire originally was when newly molded and vulcanized.

The worn tread 22 and damaged belt structure 21 is readily removed by any conventional means such as buffing or cutting. Although the entire belt structure 21 may be removed from the tire for rebelting, the removal of just the two outermost belt plies 32 and 34, as illustrated in Figure 2, will eliminate the so-called cross-hatching effect of the reinforcing cords of the belt structure 21 and consequent restrictive action of the belt structure in preventing over-expansion of the radial tire 10. Thus, this invention can be utilized in any case where the restrictive effect of the belt structure 21 is destroyed by the removal of any of the individual belt plies.

The new tread 38 and belt plies 40 and 42 should be applied to the tire casing after the tire casing has been expanded to the predetermined diameter D, as shown in Figure 2, which is substantially the same as the diameter of the newly molded and vulcanized tire casing shown in Figure 1. This predetermined diameter D is achieved by inserting into the cavity of the tire 10 a curing tube 44, as described hereinafter and as shown in Figure 2, and inflating the curing tube 44. A curing tube is a fluid-impervious inflatable member of expandable material such as rubber of a gauge conventionally of about 1/16 inch to 3/32 inch and which is similar to an inner tube of a tube-type tire. Curing tubes have been conventionally used to force the tread rubber into the matrix of a mold forming the tread design. Therefore, curing tubes are conventionally built to expand a tire if unrestricted by a mold or otherwise beyond its desired diameter without rupture of the curing tube in order to effectively force the tread rubber into the matrix.

A curing tube 44 used in practicing this invention has a restricting member 46 integral therewith for limiting expansion of the tire 10 to predetermined diameter D. The restricting member 46 has a circumference correlated to diameter D by utilizing principles commonly known in the art. It is attached circumferentially about the curing tube 44 and preferably cured thereto. The restricting member 46 is an inextensible band which has a width less than the tread width and which may be composed of inextensible cords 48 of such materials as glass fibers, metal, or aramid. The cords 48 are parallel and extend longitudinally of the band. The width of the restricting member 46 is naturally dependent upon the size of the tire 10. Preferably, the restricting member width should be between about 25 and 60 percent of the tread width. The tread width is determined by the distance measured in a direction parallel to the tire's rotational axis at the widest point between the edges of the tire's footprint; that is, the portion of the tire which touches a flat surface of the road or ground when the tire is properly mounted on a vehicle at rated load and pressure. For a size 11.00R22.5 truck tire, a curing tube with a restricting member of aramid cords and having a width of 4 inches was found to work satisfactorily. The restricting member 46 should be oriented mid-circumferentially of the curing tube 44 such that it will be disposed mid-circumferentially of the tire casing for expansion thereof.

After the curing tube 44 is inserted into the tire cavity and after the tire 10 is preferably mounted on a rim such as a conventional retreading rim (not shown), the curing tube 44 is inflated thereby causing expansion of the tire 10 to a predetermined diameter D. The removed belt plies 32 and 34 are then at least replaced with new belt plies 40 and 42 such that the new belt structure is essentially the same as the old one. New tread material 38 is then placed around the renewed belt structure by any suitable means.

The new tread 38 can be composed of unvulcanized elastomeric material or it can be as shown in Figure 2, a precured tread; that is, a tread which has been previously molded and vulcanized. When a new tread of unvulcanized rubber material is used, the retreaded tire is usually conventionally cured in a mold to produce a pattern of ribs and grooves in the tread. But in cases of large tires, such as earthmover tires, the pattern of lugs and grooves is often formed by hand or machine grooving the tread before or after vulcanization of the rubber material of the tread. Likewise, the new belt plies 40 and 42 can be unvulcanized or precured.

While the curing tube 44 is still in the cavity of the tire 10 and inflated, the tire 10 is heated in a conventional curing chamber (not shown) in an atmosphere of steam or another suitable medium at temperatures of around 200°F. or more to bond the new tread 38 and belt plies 40 and 42 to the tire 10. Alternately, the tread 38 and belt plies 40 and 42 may be bonded to the tire 10 by any other suitable means.

Thus, there is provided a method of preventing over-expansion of a radial tire which has belt plies which have been damaged and removed for replacement. In this manner, the size and shape of the retreaded tire is essentially the same as the tire was when it was newly molded and vulcanized.

-7-

While certain representative embodiments and
details have been shown for the purpose of illustrating
the invention, it will be apparent to those skilled in
the art that various changes and modifications may be
made therein without departing from the spirit or scope
of the invention.

0047711

WHAT IS CLAIMED IS:

1. A method of retreading a radial tire having damaged belt plies comprising:

(a) removing the tread of the tire;

(b) removing the damaged belt plies;

(c) inserting into the cavity of the tire a curing tube having a restricting member integral therewith for limiting expansion of the tire to a predetermined diameter;

(d) expanding the tire to said predetermined diameter by inflating said curing tube;

(e) replacing the damaged belt plies with new belt plies;

(f) replacing the tread with a new tread; and

(g) bonding the new tread and belt plies to the tire while said curing tube is in the cavity of the tire and inflated.

2. A method according to Claim 1, wherein the new tread is precured.

3. A method according to Claims 1 or 2, wherein the new tread and belt plies are bonded to the tire in a curing chamber without the use of a mold.

4. A method according to Claim 3, wherein said restricting member is cured to said curing tube.

5. A method according to Claims 1 or 2, wherein the width of said restricting member is between about 25 and 60 percent of the tread width, and said restricting member is oriented mid-circumferentially of said curing tube.

6. A method according to Claim 5, wherein the new tread and belt plies are bonded to the tire in a curing chamber without the use of a mold, said restricting member being cured to said curing tube.

7. A curing tube to limit expansion of a used tire casing to a predetermined circumferential diameter for application of new belt plies and tread, the curing tube comprising a fluid-impervious inflatable member for insertion in the cavity of a used tire casing to provide expansion thereof upon inflation of said inflatable member, and a restricting member integral with said inflatable member and extending circumferentially about said inflatable member to restrict the maximum inflated circumferential diameter of the curing tube to a diameter which will limit expansion of the tire casing to said predetermined circumferential diameter when the curing tube is inserted in the cavity of the tire casing and inflated.

8. A curing tube according to Claim 7, wherein said restricting member is cured to said inflatable member.

9. A curing tube according to Claims 7 or 8, wherein the width of said restricting member is between about 25 and 60 percent of the tread width of the tire casing when retreaded, said restricting member being oriented mid-circumferentially of the curing tube.

0047711

1 / 1

FIG. 1

FIG. 2